Europäisches Patentamt

European Patent Office

Office européen des brevets

(11) Publication number: **0 381 955**
**A1**

(12) # EUROPEAN PATENT APPLICATION

(21) Application number: **90100868.0**

(22) Date of filing: **17.01.90**

(51) Int. Cl.5: **F01D 5/18**

(30) Priority: **06.02.89 US 306186**

(43) Date of publication of application: .
**16.08.90 Bulletin 90/33**

(84) Designated Contracting States:
**CH DE FR GB IT LI NL SE**

(71) Applicant: **WESTINGHOUSE ELECTRIC CORPORATION**
**Westinghouse Building Gateway Center**
**Pittsburgh Pennsylvania 15222(US)**

(72) Inventor: **Tobery, Edward Wayne**
**605 Franklin Drive**
**West Chester, Pennsylvania 19382(US)**

(74) Representative: **Fleuchaus, Leo, Dipl.-Ing. et al**
**Patentanwälte Helmut Schroeter, Klaus**
**Lehmann, Wulf Wehser, Rupprecht Holzer,**
**Wolfgang Gallo Ludwigstrasse 26**
**D-8900 Augsburg(DE)**

(54) **Gas turbine with air-cooled vanes.**

(57) A gas turbine with air-cooled vanes provided with means for preventing the plugging of cooling air distribution holes in the hollow gas turbine vanes by particles entrained in the cooling air. A portion of the cooling air is bled from the vane and discharged into the hot gas downstream of the vane, the shunted bleed air carrying the entrained particles.

FIG. 2

EP 0 381 955 A1

Xerox Copy Centre

## GAS TURBINE WITH AIR-COOLED VANES

The present invention relates to gas turbines. More specifically, the present invention relates to a gas turbine with air-cooled vanes with air passages in the vanes.

A gas turbine is comprised of a compressor section for compressing air, a combustion section for heating the compressed air by burning fuel therein, and a turbine section for expanding the gas discharged from the combustion section.

The hot gas flow path of the turbine section of a gas turbine is comprised of an annular chamber contained within a cylinder and surrounding a centrally disposed rotating shaft. Inside of the annular chamber are alternating rows of stationary vanes and rotating blades arrayed circumferentially around the annular chamber. Hot gas discharged from the combustion section of the gas turbine flows over these vanes and blades. Since, to achieve maximum power output, it is desirable to operate the gas turbine so that this gas temperature is as high as feasible, the vanes and blades must be cooled. Cooling is obtained by causing relatively cool air to flow within and over the vanes and blades. To facilitate such cooling of the vanes, a cavity is provided inside of each vane. The cavity is enclosed by the walls which form the airfoil portion of the vane. Cooling air enters the cavity from an opening on the outboard end of the vane. The cooling air flows through the cavity and then leaves the vane by flowing through holes in the walls of the vane enclosing the cavity. After discharging from these holes, the cooling air enters and mixes with the hot gas flowing over the vanes.

To adequately cool the vane it is necessary to guide the cooling air flowing through the cavity to ensure that it is properly distributed over the entire surface of the walls forming the cavity. This distribution is accomplished by installing a thin-walled vessel, referred to as an insert, into the cavity. After entering the vane, the cooling air flows into the insert and is distributed around the cavity by a plurality of small distribution holes dispersed throughout the insert.

Since to be effective the cooling air must be pressurized, it is bled from the compressed air discharged from the compressor. If the gas turbine is operating in a dirty or dusty environment, small particles entrained in the compressed air become deposited and accumulate in the small distribution holes in the insert, thereby plugging the holes. As a result, the ability of the insert to properly distribute the cooling air is impaired.

Accordingly, it is the principal object of the present invention to provide an arrangement in which the plugging of holes in an insert used to distribute cooling air throughout the vane is prevented so as to ensure proper distribution of cooling air within a gas turbine vane.

With this object in view, the present invention resides in a gas turbine comprising a compressor section for compressing air, a combustion section connected to said compressor section for generating hot gas by burning fuel in the compressed air, a turbine section connected to said combustion section, for expanding the hot gas, a plurality of stationary vanes arranged within said turbine section so as to surround a rotating shaft, said vanes forming an annular structure through which said hot gas flows, each of said vanes having a cavity formed therein, and means for supplying cooling air to said cavities in said vanes, characterized by means for bleeding a portion of said cooling air from said cavities, such that particles entrained in said cooling air are removed from said cavities.

Generally, an insert is disposed in each cavity to distribute the cooling air throughout the vane by causing it to flow through a plurality of small holes formed in the insert. Plugging of these small holes by particles entrained in a cooling air is prevented by bleeding a portion of the air out of the cavity, the bleed air carrying with it the particles which entered the cavity along with the cooling air. Bleeding is accomplished through a tube which connects a large hole in the insert to a manifold formed on the inner shroud of the vane. From the manifold the bleed air is discharged into the hot gas flowing downstream of the vane through a hole in the inner shroud.

The invention will become more readily apparent from the following description of a preferred embodiment thereof shown, by way of example only, in the accompanying drawings, wherein:

Figure 1 is a longitudinal cross-section of a portion of the turbine section of a gas turbine, showing a first row stationary vane.

Figure 2 is an enlarged longitudinal cross-section of the first row stationary vane shown in Figure 1.

Figure 3 is a cross-section of the vane shown in Figure 2 taken through line III-III of Figure 2.

Figure 4 is a plan view of the inner surface of the inner shroud of the vane shown in Figure 2 taken through line IV-IV of Figure 2.

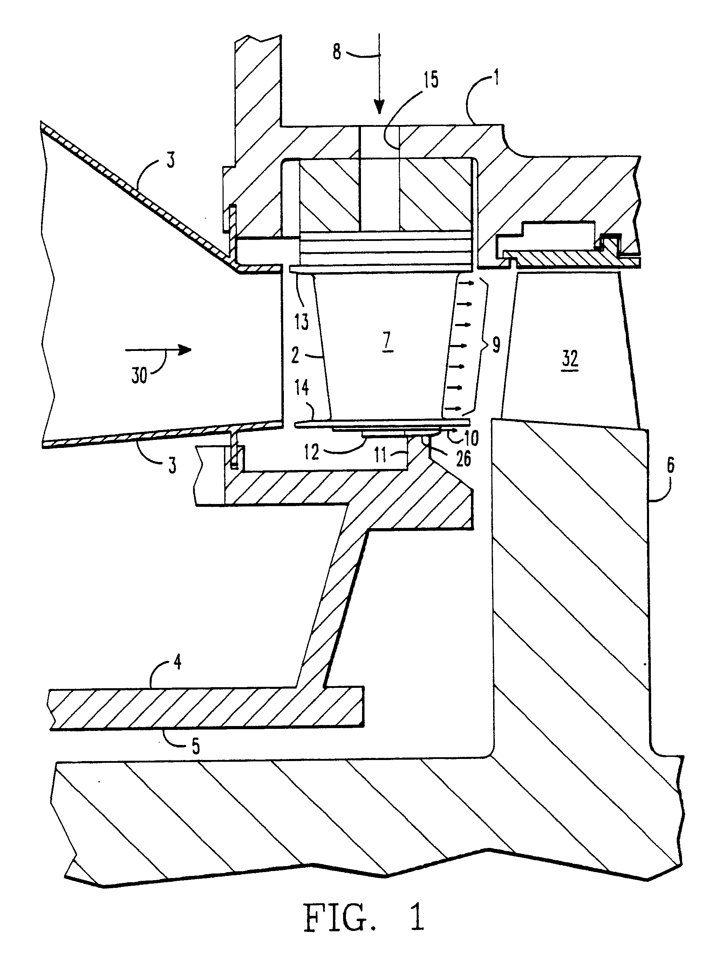

Figure 1 shows a portion of the turbine section of a gas turbine in the vicinity of the row 1 stationary vanes 7. A plurality of vanes are contained within a turbine cylinder 1 and are circumferentially arrayed around the turbine in a row. At the radially outboard end of each vane is an outer shroud 13, and at the radially inboard end an inner shroud 14. The portion of the vane between the shrouds comprises an airfoil 2. The inner and outer shrouds of each adjacent vane abut one another so that, when combined over the entire row, the shrouds form a short axial section of the annular chamber through which the hot gas 30 flows.

A shaft 5 forms a portion of the turbine rotor in the vicinity of the first row vanes 7 and is encased by a housing 4. Gas 30, which has been compressed in a compressor section and heated by burning fuel in a combustion section, neither of which are shown, is directed to the first row vanes by a duct, or transition 3. The first row vanes form the inlet to the turbine.

Immediately downstream of the first row vanes are the first row rotating blades 32. The blades are affixed to a disc 6 which also forms a portion of the turbine rotor.

The vanes 7 are cooled by compressed air 8 bled from the compressor discharge air through a bleed pipe, not shown. This cooling air 8 penetrates the turbine cylinder 1 and retainer block attached thereto, through a plurality of holes 15, and enters the vanes. The majority 9 of the cooling air is discharged through holes in the trailing edges of the vanes and mixes with the hot gas downstream of the vanes. However, according to the present invention, a portion 10 of the cooling air is bled from the vanes and discharged into the hot gas flowing downstream of the vanes in the vicinity of the inner shroud.

Since the static pressure of the hot gas downstream of the vanes is lower than that upstream of the vanes, there is a tendency for the hot gas to bypass the vanes by flowing along a path inboard of the inner shrouds, i.e., by flowing through the gap between the housing 4 and the inner shrouds 14. This is prevented by a seal 11 disposed in the housing 4. The seal is spring loaded and bears against the downstream portion 26 of the inner surface of the inner shroud, thereby blocking the flow of hot gas through the gap between the housing and the inner shrouds.

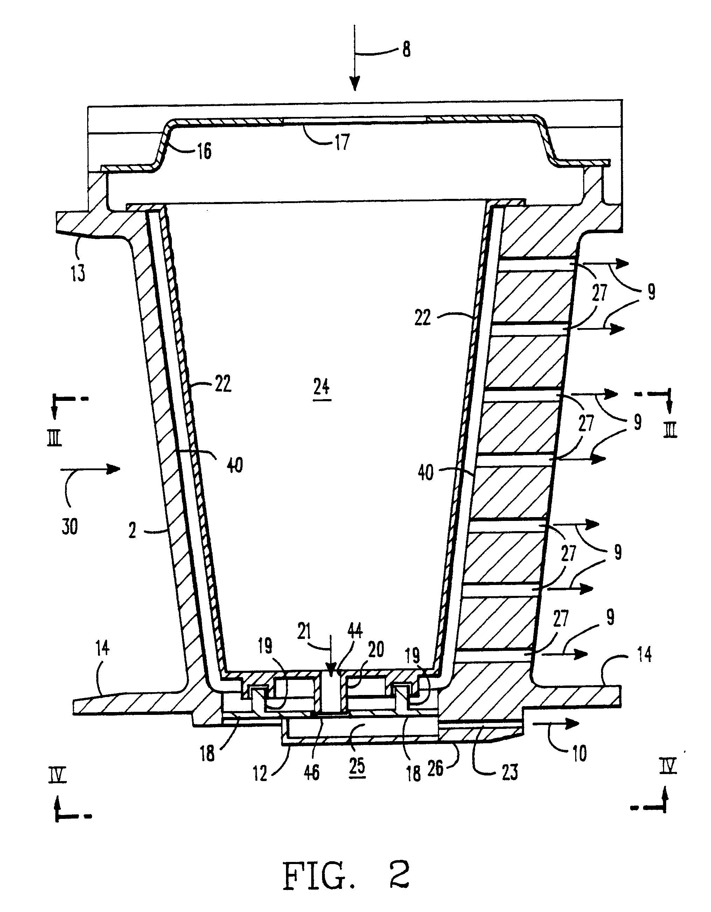

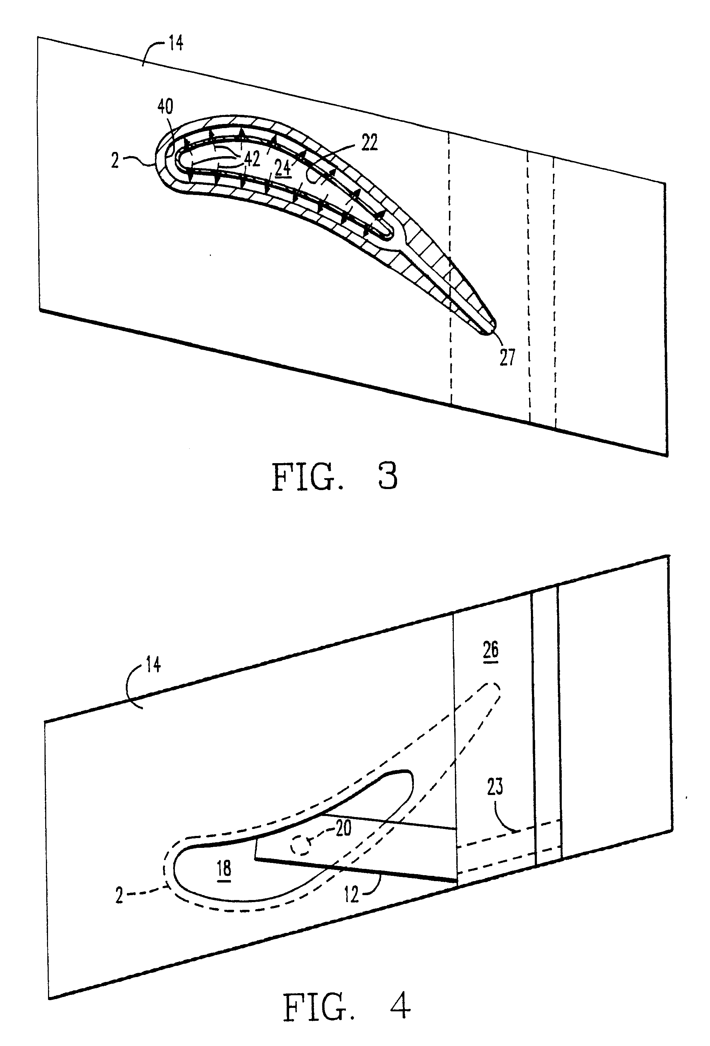

Referring now to Figure 2, the internal portion of a vane 7 can be seen. A cavity 24 is formed inside of the airfoil portion 2 of the vane. A thin-walled vessel 22 referred to as an insert, is disposed within the cavity. The outboard end of the insert is affixed to the outer shroud 13 and the inboard end is supported by pins 19 which protrude from a closure plate 18. The closure plate forms a portion of the inner shroud and seals the inboard end of the cavity. A closure cap 16 seals the cavity at the outer shroud 13. Cooling air 8 enters the vane through a hole 17 in the closure cap 16. Referring also to Figure 3, a plurality of small distribution holes, not shown, are dispersed throughout the insert 22 so that the majority of the cooling air is distributed into numerous small jets of air 42 which impinge on the inner surfaces 40 of the walls forming the airfoil portion 2 of the vane. The diameter of these small distribution holes is typically in the range of 0.76 to 1.02 mm. After flowing over the inner surfaces 40 of the walls, this portion 9 of the cooling air exits the vane through a plurality of holes 27 in the walls forming the downstream edge of the airfoil, thereby cooling the downstream edge. It should be noted that since the cooling air is bled from the compressor discharge, its static pressure is higher than that of the hot gas flowing downstream of the vanes. A portion of the pressure drop between the cooling air and the hot gas is consumed in flowing through the small distribution holes in the insert and a larger portion is consumed in flowing through the holes 27 in the airfoil.

As previously discussed, if the gas turbine is operating in a dusty or dirty environment, particles entrained in the cooling air are sometimes deposited in the small distribution holes in the insert 22 and accumulate until the holes become plugged. As result of this plugging, the cooling air is not properly distributed around the inner surfaces 40 of the airfoil walls, causing local over-temperature of the airfoil walls (hot spots). These hot spots result in deterioration of the material forming the airfoil walls and shorten the useful life of the vane.

Referring again to Figure 2, it can be seen that in accordance with the present invention, air 21 is bled from the cavity 24 through a hole 44 at the inboard end of the insert 22. The bleed air 21 carries the particles entrained in the cooling air out of the cavity, preventing them from plugging the distribution holes. A hole 46, radially aligned with hole 44, is provided in the closure plate 18. The bleed air is directed through hole 46 by a tube 20. One end of the tube is affixed to the insert at hole 44 and the other end penetrates into hole 46 in the closure plate. After passing through the closure plate 18, the bleed air enters a manifold 25 from which it exits the vane through passageway 23 in the inner shroud. In effect, passageway 23 transports the bleed air past the seal 11, shown in Figure 1, so that it discharges into the lower pressure zone downstream of the vane where it mixes with the hot gas, as previously explained.

Figures 2 and 4 show a containment cover 12 which forms the manifold 25 and encloses a portion of the inner surface of the inner shroud 14 upstream of the portion 26 of the inner shroud upon which the seal 11 bears.

In accordance with the invention, the diameter of bleed hole 44, and the inside diameter of tube 20, is in the range of four to six times larger than the diameter of the small distribution holes in the insert and they permit about 10% to 15% of the air supplied to the insert to be bled from the vane. The pressure drop between the air inside the insert and the hot gas flowing downstream of the vane to which the air is bled is larger than the pressure drop across the small distribution holes as a result of the aforementioned large pressure drop across the holes 27 in the downstream edge of the airfoil. As a result of the large bleed air pressure drop, due to the large size of bleed hole 44 and the significant quantity of cooling air bled, the particles entrained in the cooling air are preferentially bled from the insert and do not accumulate around the small distribution holes.

In addition, it should be noted that the flow area of the manifold 25 and the passageway 23 are larger than that of bleed hole 44, thus insuring that the bleed hole controls the quantity of cooling air bled from the insert. Also the diameter of hole 17 in the closure cap 16 is increased so that additional cooling air enters the vane, thereby compensating for the air bled from the insert.

## LIST OF REFERENCE NUMERALS

1 Turbine cylinder
2 Airfoil portion of vane
3 Duct
4 Housing
5 Shaft
6 Rotating disc
7 Stationary vane
8 Cooling air
9 Cooling air exiting downstream edge of vane
10 Bleed air exiting inner shroud
11 Seal
12 Containment cover
13 Outer shroud
14 Inner shroud
15 Hole in turbine cylinder
16 Closure cap
17 Hole in closure cap
18 Closure plate
19 Pin
20 Tube
21 Bleed air
22 Insert
23 Passageway in inner shroud
24 Cavity
25 Manifold
26 Portion of inner surface of inner shroud against which seal bears
27 Holes in downstream edge of vane
30 Hot gas from combustion section
32 Rotating blade
40 Inner surfaces of walls forming vane airfoil
42 Cooling air
44 Hole in insert
46 Hole in closure plate

## Claims

1. A gas turbine comprising:
a compressor section for compressing air,
a combustion section connected to said compressor section for generating hot gas by burning fuel in the compressed air,
a turbine section connected to said combustion section, for expanding the hot gas,
a plurality of stationary vanes (7) arranged within said turbine section so as to surround a rotating shaft (5), said vanes (7) forming an annular structure through which said hot gas flows, each of said vanes (7) having a cavity (24) formed therein, and means (15) for supplying cooling air to said cavities (24) in said vanes (7), characterized by means (23, 25, 44) for bleeding a portion of said cooling air from said cavities (24), such that particles entrained in said cooling air are removed from said cavities (24).

2. A gas turbine according to claim 1, characterized in that:
an outer shroud (13) is formed at the outboard end of each of said vanes (7) for supporting said vane (7), and
a hole (15) is formed in each of said outer shrouds (13) to permit access of said cooling air to said cavities (24), and
an inner shroud (14) is formed at the inboard end of each of said vanes (7), and that each of said inner shrouds defines a manifold (25) comprised of a containment cover (12) enclosing a portion of said inner shroud (14).

3. A gas turbine according to claim 2, characterized in that a hole (48) is formed in each of said inner shrouds (14) so as to permit the cooling air in a cavity (24) to flow to the respective manifold (25).

4. A gas turbine according to claim 1, 2 or 3, characterized in that a passageway (23) is provided in each of said inner shrouds (14), so as to enable said cooling air in said manifolds (24) to be discharged in a controlled manner.

5. A gas turbine according to any of claims 1 to 4, wherein an insert (22) is disposed in each of said cavities (24) with cooling air being supplied to the outboard end of each of said inserts (22), said insert (22) having a plurality of spaced first holes such that cooling air is distributed to said vanes (7) of said cavities, and second holes (27) disposed are formed in the walls forming said vanes (7) for the discharge of said cooling air and wherein each of said inserts (22) has a third hole (44) disposed in its inboard end for discharging cooling air to said manifold (25), characterized in that a fourth hole (46) is formed in each of said inner shrouds (14), said third holes in said inserts, and said insert (22) has a tube (20) extending into said fourth hole (46) in each of said inner shrouds (14) and defining said third hole (44).

6. A gas turbine according to claim 5, characterized in that the diameter of each of said third holes (44) is four to six times larger than the diameter of said first holes.

7. A gas turbine apparatus according to claim 6, characterized in that the diameter of each of said third holes (44) is sized so that the portion of said cooling air bled therethrough is in the range of 10% to 15% of the cooling air supplied to the said vanes (7).

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3533711 (KERCHER)<br>* column 7, line 23 - column 7, line 36; figures 4, 6 * | 1 | F01D5/18 |
| Y | | 1-7 | |
| Y | GB-A-2058944 (WILSON)<br>* the whole document *<br>--- | 1-7 | |
| P,X | US-A-4820122 (HALL)<br>* the whole document *<br>--- | 1 | |
| P,X | US-A-4820123 (HALL)<br>* the whole document *<br>--- | 1 | |
| A | EP-A-34961 (CUVILLIER)<br>--- | | |
| A | GB-A-2049818 (KOSTER)<br>--- | | |
| A | DE-C-736703 (ROSENLÖCHER)<br>----- | | |

| | | | TECHNICAL FIELDS SEARCHED (Int. Cl.5 ) |
|---|---|---|---|
| | | | F01D |

The present search report has been drawn up for all claims

| Place of search | Date of completion of the search | Examiner |
|---|---|---|
| THE HAGUE | 10 MAY 1990 | IVERUS D. |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 
& : member of the same patent family, corresponding
     document

EPO FORM 1503 03.82 (P0401)